# FASCICULE DE BREVET EUROPEEN

(11) **EP 1 921 529 B1**
(45) Date de publication et mention de la délivrance du brevet: **24.06.2009**
(21) Numéro de dépôt: 07119693.5
(22) Date de dépôt: 31.10.2007
(51) Int. Cl.: G05B 23/02

(54) **Dispositif et procédé de gestion maintenance d'équipements**
Vorrichtung und Verfahren der Wartungsverwaltung von Geräten
Device and method for managing equipment maintenance

(30) Priorité: 10.11.2006 FR 0609843
(43) Date de publication de la demande: 14.05.2008
(73) Titulaire: THALES, 92200 Neuilly sur Seine (FR)
(72) Inventeur: BAILLY, CARINE, 31170, TOURNEFEUILLE (FR); ALBOUY, CHRISTIAN, 31140, SAINT ALBAN (FR); FOURNIER, François, 31120, ROQUES/SIR/GARONNE (FR)
(74) Mandataire: Esselin, Sophie

(56) Documents cités:
- US-A1- 2005 242 943

## Description

Le domaine de l'invention est celui de la gestion de maintenance d'équipements. L'invention concerne plus précisément un dispositif de gestion de maintenance d'équipement électroniques qui sont intégrés à un système.

Des équipes de maintenances sont chargées de maintenir en fonctionnement un système en se fondant sur des observations d'utilisateurs du système ou sur des messages provenant de dispositifs de tests intégrés aux équipements pour établir un diagnostic de défaillance d'équipement, identifier et localiser des défaillances d'équipement dans le système, et si besoin, remplacer un équipement défaillant, en partie ou en totalité. On appelle gestion de maintenance le recueil de messages et d'observations servant à dépister des défaillances d'équipements.

L'invention concerne également un procédé de gestion de maintenance d'équipements.

L'architecture des systèmes complexes est en général fondée sur des transferts d'informations entre des équipements électroniques reliés entre eux par un réseau de communication. La localisation des équipements dans le système répond parfois à des spécifications d'encombrement sévères, de plus, les équipements peuvent être difficile d'accès et être distants d'une dizaine de centimètres à plusieurs centaines de mètres : c'est par exemple le cas pour des équipements intégrés à un système aéronautique monté à bord d'aéronef.

Les équipements électroniques intégrés à un système comportent des composants, logiciels et matériels. Ces équipements possèdent en général une configuration qui identifie parfaitement leurs composants auprès du constructeur de l'équipement et auprès du système. La configuration prend la forme d'un ou de plusieurs identifiants qui peuvent être fixés sur l'équipement, comme par exemple des inscriptions sur une étiquette collée sur la surface externe d'une paroi d'un boîtier protégeant l'équipement. La configuration d'un équipement permet à une équipe de maintenance de remplacer un équipement défaillant par un nouvel équipement comportant la même configuration ou une configuration dont un constructeur de l'équipement peut garantir que l'équipement qui la porte a un fonctionnement compatible avec l'équipement défaillant. La configuration d'un équipement permet également d'alerter le constructeur de l'équipement sur l'existence d'une défaillance chronique d'un type de ses équipements. Lorsque le constructeur est informé de toutes les défaillances rencontrées par ses équipements en fonctionnement, ces informations lui permettent de constater qu'une fréquence de défaillance d'un type de ces équipements est anormalement élevée. De cette façon, le constructeur peut mettre en évidence une faiblesse d'un type d'équipement et proposer un correctif aux équipements de ce type.

Le document US 2005/242943 divulgue un tel équipement.

Une configuration applicable d'un système est une liste constituée par des configurations des différents équipements intégrés au système. La configuration des équipements peut évoluer dans le temps, on parle alors de gestion de configuration de système qui se fonde sur une gestion de configuration d'équipements.

Pour des systèmes conçus avant les années 1970, la gestion de la configuration des équipements pouvait en général être qualifiée de « statique », c'est à dire que la configuration applicable d'un système se réduisait à un registre de configuration du système, par exemple un document sous forme papier, qui contenait toutes les configurations des équipement intégrés au système. Toute évolution d'une configuration d'un des équipements intégré au système était consignée manuellement dans le registre de configuration.

Le caractère statique de ce type de gestion de configuration présente l'inconvénient de rendre très fastidieuse une vérification ultime de compatibilité entre la configuration des équipements intégrés à un système et la configuration applicable du système. Cette vérification, peut avoir lieu par exemple au moment d'un démarrage du système, et sert à couvrir le risque constitué par un remplacement erroné d'un équipement défaillant par un équipement dont la configuration n'est pas conforme à celle consignée dans le registre des configuration. Le remplacement erroné a lieu entre deux alimentations successives du système en énergie: il doit être détecté au plus tôt.

Des systèmes de conception plus récents intègrent en général une gestion de maintenance dite « intelligente », on parle aussi de « système intelligent ». La gestion de configuration « intelligente » consiste à stocker la configuration d'un équipement dans une mémoire interne à l'équipement. La configuration de l'équipement est transmise, lors de l'alimentation en énergie du système, avant toute autre chose, à un calculateur principal du système, au moyen d'un réseau de communication. Le réseau de communication relie, par exemple en étoile, le calculateur principal et les équipements du système. Le calculateur principal vérifie que les configurations que les équipements lui transmettent sont compatibles avec la configuration applicable du système qui est préalablement stockée dans une de ses mémoires internes.

En général, les équipements des « systèmes intelligents » comportent, en outre, un dispositif de test intégré (connus sous l'appellation anglaise « Built-In-Test Equipment » ou l'acronyme BITE). Le dispositif de test intégré délivre, à destination du calculateur principal, des messages contenant des informations sur le fonctionnement de l'équipement auquel il est intégré, au travers du réseau de communication. La gestion de maintenance « intelligente » consiste à centraliser dans une mémoire non volatile MVN appartenant au calculateur principal les messages décrivant des anomalies de fonctionnement des équipements intégrés au système et à produire, à chaque arrêt du système, des rapports synthétisant ces anomalies. Les rapports sont stockés dans une mémoire non volatile de l'équipement concerné pour y être consulté utilement par une équipe de maintenance.

Toutefois, la gestion de maintenance des « équipements intelligents » souffre d'un double inconvénient :

En général, on peut consulter le rapport d'anomalie stocké dans une mémoire non volatile de l'équipement uniquement lorsque l'équipement qui intègre cette mémoire est alimenté en énergie et est relié à un réseau de communication. Lorsque l'équipement a été retiré du système par une équipe de maintenance, soit parce qu'il a été identifié comme défaillant, soit parce que l'équipement est intégré à un système qui n'est pas alimenté en énergie, l'équipe de maintenance doit nécessairement recourir à un banc de test pour accéder au rapport d'anomalie concernant l'équipement. Un banc de tests est une installation qui est conformée pour alimenter en énergie et accéder au contenu des mémoires internes à l'équipement. Cette installation est coûteuse et/ou volumineuse et il n'est pas toujours possible de transporter rapidement l'équipement auprès d'un banc de test. Le retard pris pour accéder au rapport d'anomalie peut rejaillir directement sur la durée d'indisponibilité de l'équipement, et peut engendrer une durée d'indisponibilité d'un système qui peut se révéler très coûteuse.

Dans l'art antérieur, les informations qui sont transmises dans le sens ascendant, c'est à dire les messages délivrés par les dispositifs de tests intégrés des équipements et reçus par le calculateur principal du système comportent une synthèse des résultats de tests réalisés par les dispositifs de test intégrés. Ce choix visant à réduire le volume de données transmises est dicté en général par des limitations liées au débit maximum en information du réseau de communication, à la capacité réduite des mémoires non volatiles. Certains résultats de tests concernent exclusivement les équipements comme par exemple, ceux correspondant à une localisation interne de la panne au sein de l'équipement ou au contexte local des défaillances, et d'autres étant spécifiques, comme par exemple des données techniques pour l'instrumentation du fournisseur de l'équipement : ces messages ne sont pas utilisées par le calculateur principal, il n'est pas nécessaire des les lui transmettre.

Pour ces différentes raisons, les messages ascendants ne comportent donc pas toutes les informations produites par les dispositifs de test intégré. Pourtant, il peut être très instructif, pour une équipe de maintenance qui a extrait un équipement hors d'un système, de connaître l'ensemble des résultats de tests réalisés par le dispositif de test intégré de l'équipement, la nature des anomalies de fonctionnement de l'équipement qui ont été signalées au calculateur principal par les dispositifs de tests intégrés d'autres équipements ainsi que la configuration applicable du système.

Une première solution connue pour pallier les inconvénients présentés par les « systèmes intelligents » est une gestion de maintenance basées sur l'emploi d'étiquettes radio (ou « RFID Tag » ou encore « Radio-Frequency Identification Tag » en anglais). Une étiquette radio est un composant passif qui a la capacité de stocker des informations et de les communiquer, sur requête, au moyen d'une liaison sans contact, en général dans la gamme des fréquences radio.

Lorsqu'une telle étiquette radio, dans laquelle une information de configuration d'un équipement a été stockée au préalable, est collée sur l'équipement, elle permet à une équipe de maintenance équipée d'un lecteur d'étiquette radio d'accéder à l'information de configuration de l'équipement, même lorsque l'équipement n'est pas alimenté en énergie, et ceci sans recourir à un banc de test.

Toutefois, l'étiquette radio collée sur un équipement ne permet pas de recueillir l'ensemble des résultats de tests réalisés par le dispositif de test intégrés de l'équipement.

En effet, la gamme de fréquence de la liaison sans contact permettant de communiquer avec l'étiquette radio, en général dans le domaine radio, n'est pas adaptée à une communication sur une portée dépassant le mètre, dans un environnement pouvant être constitué de surfaces en matériaux conducteurs électriques. Une gestion de maintenance fondée uniquement sur l'emploi d'étiquette radio fixée à des équipements ne constitue donc pas une solution au problème de communication puis de stockage de l'ensemble des résultats de tests réalisés par les dispositifs de test intégrés dans des étiquettes radio.

Le but de l'invention est de pallier ces inconvénients. Plus précisément, il concerne un dispositif de gestion de maintenance d'un nombre N d'équipements EQi (10, 20, 30) intégrés à un système (1), i désignant un indice d'identification de l'équipement EQi (10, 20, 30) et étant compris entre 1 et N, le système (1) comportant en outre un calculateur principal RC (2), les équipements EQᵢ (10, 20, 30) échangeant des données avec le calculateur principal RC (2) par un réseau de communication, les équipements EQᵢ (10, 20, 30) étant susceptibles d'être intégrés au système (1) ou d'être retirés hors du système (1), chaque équipement EQᵢ (10, 20, 30) étant protégé par un boîtier de protection BPᵢ, le noeud de communication Nⱼ (12, 22, 32) occupant une position interne au boîtier BPᵢ et étant conformé pour échanger des données avec l'étiquette radio ETᵢ (11, 21, 31), l'étiquette radio ETᵢ (11, 21, 31) étant fixée solidairement au boîtier BPᵢ et étant conformée pour délivrer des données par une liaison sans contact, caractérisé en ce que le boîtier BPᵢ comporte :
- des moyens d'isolation électromagnétique du noeud de communication Nᵢ qui protègent l'équipement EQᵢ d'émissions électromagnétiques produites par le noeud de communication Nᵢ ;
- des moyens amovibles d'obturation qui masquent l'étiquette radio ETᵢ (11, 21, 31) par rapport à l'extérieur du boîtier BPᵢ, les moyens d'obturation étant dans un état fermé ou dans un état ouvert ;
et en ce que le noeud de communication Nᵢ et l'étiquette ETᵢ sont à l'intérieur d'une cavité formée par les moyens d'isolation électromagnétique et les moyens amovibles d'obturation, la cavité est close lorsque les moyens amovibles d'obturation sont dans un état fermé.

Un premier avantage de cette invention tient dans la compatibilité que le dispositif selon l'invention présente avec les systèmes « intelligents » existants. En effet, grâce aux moyens d'isolation électromagnétique, un noeud de communication peut échanger des données avec une étiquette radio fixée au boîtier de l'équipement sans interférer avec le fonctionnement du reste de l'équipement. Cet échange peut avoir lieu pendant le fonctionnement de l'équipement, juste avant une mise en marche d'équipement ou encore lors d'une interruption d'alimentation en énergie du système. Le dispositif selon l'invention ne requiert pas une nouvelle certification des équipements auxquels ils sont liés, ce qui constitue un avantage économique très important.

De plus, des informations provenant du calculateur principal, comme par exemple la configuration applicable, peuvent être stockées sur l'étiquette radio et rendu facilement accessibles à une équipe de maintenance. Le calculateur principal délivre des informations à un noeud de communication en empruntant le réseau de communication du système, puis le noeud envoie ces informations vers l'étiquette. Le dispositif selon l'invention se fonde sur le réseau de communication existant du système pour véhiculer des informations : il ne requiert pas un déploiement de réseau de communication supplémentaire, ce qui constitue également un avantage économique très important..

Un autre avantage de l'invention tient dans la nature des informations auquel le dispositif selon l'invention facilite l'accès. En effet, il est possible de stocker dans l'étiquette radio aussi bien des informations sur les défaillances présentes et passées d'un équipement pour constituer un véritable historique des interventions subies par l'équipement, que des informations concernant les systèmes dans lequel l'équipement a pu successivement être intégré. Ces information sont utiles, dans certains cas, pour faciliter la compréhension, par une équipe de maintenance, de la nature et de l'origine d'une défaillance.

L'invention concerne également un procédé de gestion de maintenance d'un nombre N d'équipements EQᵢ intégrés à un système, i désignant un indice d'identification de l'équipement EQᵢ et étant compris entre 1 et N, l'équipement EQᵢ comportant un dispositif de test intégrés BITEᵢ, le dispositif BITEᵢ délivrant à un calculateur principal RC (2) du système des messages de résultats de test, via un réseau de communication du système, chaque équipement EQᵢ comportant un noeud de communication Nᵢ et une étiquette ETᵢ et étant protégé par un boîtier de protection BPᵢ, le noeud de communication Nⱼ occupant une position interne au boîtier BPᵢ et étant conformé pour échanger des données avec l'étiquette radio ETᵢ, l'étiquette radio ETᵢ étant fixée solidairement au boîtier BPᵢ et étant conformée pour échanger des données par une liaison sans contact.
ledit procédé étant caractérisé en ce qu'il comporte les étapes :
- transmission par le dispositif BITEᵢ à l'étiquette ETᵢ, via les noeuds de communication Nⱼ, des résultats de tests;
- stockage des résultats de test dans une mémoire de l'étiquette ETᵢ.

D'autres caractéristiques et avantages de l'invention apparaîtront à la lecture de la description détaillée qui suit, faite à titre d'exemple non limitatif et en référence aux dessins annexés dans lesquels :
- la figure 1 représente schématiquement un « système intelligent » selon l'art antérieur ;
- la figure 2 représente schématiquement un système comportant un dispositif de gestion de maintenance selon l'invention.
- la figure 3 représente une vue perspective en éclaté d'un premier mode de réalisation d'un dispositif selon l'invention ;
- la figure 4 représente une vue en coupe du premier mode de réalisation d'un dispositif selon l'invention, comportant des moyens amovibles d'obturation en état ouvert et en état fermé ;
- la figure 5 représente une vue en coupe d'un deuxième mode de réalisation d'un dispositif selon l'invention, comportant des moyens amovibles d'obturation en état ouvert et en état fermé;
- la figure 6 représente une vue en coupe d'un troisième mode de réalisation d'un dispositif selon l'invention, comportant des moyens amovibles d'obturation en état ouvert et en état fermé.
- la figure 7 représente une vue en coupe d'un quatrième mode de réalisation d'un dispositif selon l'invention, comportant des moyens amovibles d'obturation en état ouvert et en état fermé.

D'une figure à l'autre, les mêmes éléments sont repérés par les mêmes références.

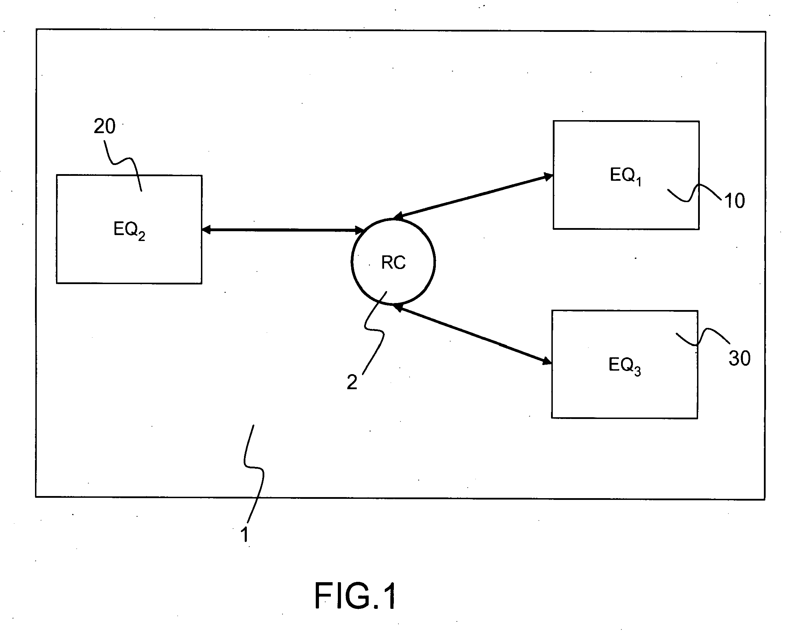

La figure 1 représente un « système intelligent », 1 selon l'art antérieur, qui comporte un calculateur principal RC et une pluralité d'équipements électroniques EQᵢ, comportant chacun au moins un dispositif de test intégrés BITEᵢ, et une mémoire non volatile MVNᵢ, i désigne un indice identifiant les équipements EQᵢ.

Chaque équipement EQᵢ est relié directement au calculateur principal RC par un réseau de communication du système. Le réseau de communication est en général filaire, c'est à dire que le calculateur et les équipements comportent chacun un connecteur électrique et qu'au moins un câble conducteur électrique relie le connecteur du calculateur principal au connecteur de l'équipement. Le réseau peut également être « sans fil », c'est à dire que les équipements communiquent avec le calculateur principal au travers d'un réseau de communication ne comportant pas de câble conducteur électrique. Les dispositifs de test intégrés BITEᵢ, les mémoires non volatile MVNᵢ des équipement EQᵢ et les connecteurs électriques ne sont pas représentés sur la figure.

Sur le réseau de communication, le calculateur principal RC échange des données et des commandes avec les équipements électroniques EQᵢ. Lors de l'alimentation en énergie du système, une configuration de l'équipement stockée sur une mémoire interne à l'équipement peut en outre être communiquée au calculateur principal RC afin qu'il vérifie que les équipements EQᵢ qui sont connectés au réseau possèdent bien tous une configuration compatible de sa configuration applicable.

Des messages de résultats de tests délivrés par les dispositifs de tests intégrés BITEᵢ sont également transmis par le réseau de communication, dans le sens ascendant, c'est à dire que les messages sont délivrés par les équipements électroniques EQᵢ et sont destinés au calculateur principal. En raison notamment d'un débit restreint du réseau de communication, ces messages ont un contenu qui ne représente pas la totalité des résultats de tests effectués par les dispositifs BITEᵢ. Le calculateur principal produit des rapports synthétisant les messages de résultats de tests. Ces rapports sont envoyés et stockés dans les mémoires non volatile des équipement MVNᵢ.

Lorsqu'un message de résultat de test contient une information de défaillance d'un équipement, par exemple une défaillance de l'équipement EQ₁, le système peut, en fonction du type de défaillance, décider d'utiliser ou d'ignorer les données et les commandes délivré par l'équipement EQ₁. Dans tous les cas, il inscrit dans les mémoires non volatiles MVNᵢ des équipements EQᵢ un rapport de résultat de test comportant au moins une référence de l'équipement ayant émis le message de résultat de test, un contenu du message de résultat de test et par exemple une date de réception, une date d'émission ou de création de message de résultat de test par le calculateur principal RC ou par l'équipement EQᵢ.

Au cours d'une opération de maintenance, une équipe de maintenance peut lire le contenu de la mémoire non volatile MVNᵢ. L'équipe de maintenance se fonde sur ce contenu pour faire un diagnostic sur la nature de la défaillance et/ou sur la localisation de l'équipement défaillant EQ₁ dans le système : le diagnostic peut conduire à remplacer l'équipement défaillant EQ₁. La lecture du contenu de la mémoire non volatile MVNᵢ peut être réalisée, par exemple, au moyen d'un deuxième connecteur dit « connecteur de maintenance » disposé sur une partie de l'équipement EQ₁ accessible à l'équipe de maintenance sans qu'il soit nécessaire d'extraire l'équipement du système. La lecture du contenu de la mémoire non volatile MVNᵢ requiert que l'équipement soit alimenté en énergie.

Les connecteurs de maintenance ne sont pas représentés sur la figure.

Lorsque l'équipe de maintenance extrait un équipement du système avant d'avoir lu le contenu de la mémoire MVNᵢ, par exemple en raison d'une position de l'équipement dans le système gênant l'accès au connecteur de maintenance, elle doit néanmoins accéder aux messages délivrés par le dispositif de test intégré de l'équipement et déterminer la configuration de l'équipement défaillant pour réaliser son diagnostic. Pour ce faire, parce que l'équipement EQᵢ n'est pas alimenté en énergie, l'équipe de maintenance peut d'une part consulter des informations de configuration figurant sur une étiquette fixée sur l'équipement, à condition que ces informations soient à jour et reflètent la configuration réelle de l'équipement au moment de la défaillance, d'autre part l'équipe de maintenance doit nécessairement recourir à un banc de test pour accéder aux résultats de tests qui sont stockés dans la mémoire non volatile MVNᵢ de l'équipement EQᵢ.

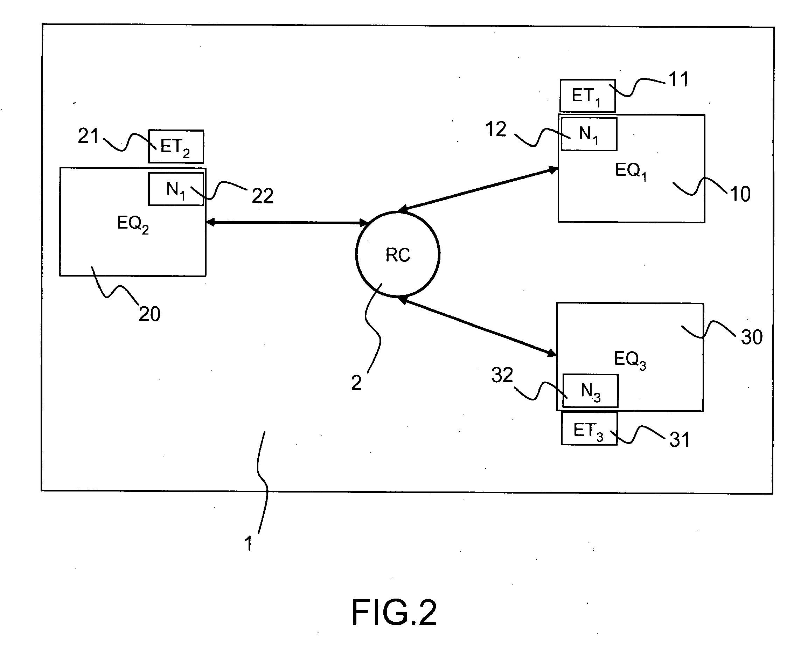

La figure 2 représente « système intelligent », 1 comportant un dispositif de gestion de maintenance selon l'invention.

Le système comporte en outre un calculateur principal RC et une pluralité d'équipements électroniques EQᵢ, comportant chacun au moins un dispositif de test intégré BITEᵢ, une mémoire non volatile MVNᵢ, i désigne un indice identifiant les équipements. Chaque équipement EQᵢ est protégé par un boîtier de protection BPᵢ.

Le dispositif selon l'invention comporte un nombre N d'étiquettes radio ETᵢ, et N noeuds de communication Nᵢ.

Chaque étiquette ETᵢ est fixée solidairement au boîtier de protection BPᵢ.

Un noeud de communication Nᵢ occupe une position une position interne au boîtier BPᵢ et chaque noeud de communication Nᵢ est conformé pour échanger des données avec les étiquettes radio ETᵢ.

Ainsi, on dispose sur chaque équipement EQᵢ d'une étiquette radio ETᵢ pouvant stocker notamment une information de configuration de l'équipement EQᵢ.

Les informations stockées dans l'étiquette radio ETᵢ sont accessibles à une équipe de maintenance équipée d'un lecteur/marqueur d'étiquette radio. L'accès à l'information stockée peut avoir lieu lorsque l'équipement EQᵢ n'est pas alimenté en énergie ou lorsque l'équipement n'est pas intégré au système à condition que le lecteur/marqueur d'étiquette délivre un signal électromagnétique pouvant être reçu par l'étiquette radio ETᵢ. Le lecteur/marqueur d'étiquette radio établit une liaison sans contact avec l'étiquette radio ETᵢ. Pour que l'équipe de maintenance accède à l'information stockée dans l'étiquette ETᵢ, il est préférable que le lecteur/marqueur d'étiquette radio puisse être placé à proximité directe de l'étiquette ETᵢ, en vue de celle-ci.

Avantageusement, l'étiquette radio ETᵢ comporte :
- un récepteur REᵢ de données délivrées par un noeud de communication Nᵢ;
- une mémoire MEᵢ pour stocker des données ;
- un émetteur EEⱼ pour délivrer des données à un noeud de communication Nᵢ, sur requête ;

Avantageusement, le noeud de communication Nᵢ comporte :
- un récepteur, RNᵢ de données délivrées par une étiquette radio ETᵢ ;
- un émetteur ENᵢ pour délivrer des données à une étiquette radio ETᵢ.

Chaque boîtier BPᵢ comporte :
- des moyens d'isolation électromagnétique du noeud de communication Nᵢ, les moyens d'isolation électromagnétique protègent l'équipement EQᵢ d'émissions électromagnétiques produites par le noeud de communication Nᵢ;
- des moyens amovibles d'obturation de l'étiquette radio ETᵢ (11, 21, 31) par rapport à l'extérieur du boîtier BPᵢ, les moyens d'obturation étant dans un état fermé ou dans un état ouvert ;

Les moyens d'isolation électromagnétique et les moyens amovibles d'obturation ne sont pas représentés sur la figure 2.

Les moyens d'isolation électromagnétique sont, par exemple, constitués par un parallélépipède, comportant cinq parois en matériaux conducteurs électriques, qui bloquent d'éventuelles émissions électromagnétiques produites par le noeud de communication Nᵢ en direction de composants de l'équipement EQᵢ.

Les moyens amovibles d'obturation protégent mécaniquement l'étiquette radio. Ils sont par exemple constitués d'une paroi en matériau conducteur électrique pouvant fermer le parallélépipède constitué par les moyens d'isolation. Les moyens d'isolation électromagnétique et les moyens amovibles d'obturation forment une cavité qui renferme le noeud de communication Nᵢ et l'étiquette ETᵢ, la cavité est close lorsque les moyens amovibles d'obturation sont dans un état fermé.

Avantageusement, lorsque les moyens amovibles d'obturation sont en état fermé, ils empêchent l'étiquette radio ETᵢ de délivrer des données à l'extérieur du boîtier BPᵢ.

Un stockage initial de l'information de configuration de l'équipement EQᵢ est réalisé par un constructeur de l'équipement au moyen du lecteur/marqueur d'étiquette radio conformé pour « inscrire » des données dans la mémoire MEᵢ de l'étiquette EQᵢ. Cette inscription peut avoir lieu lorsque l'équipement EQᵢ n'est pas alimenté en énergie ou lorsque l'équipement n'est pas intégré au système.

Par la suite, lorsque l'équipement est intégré au système, l'information de configuration peut être modifiée pour refléter, par exemple, une mise à jour d'un composant logiciel intégré à l'équipement EQᵢ. La modification de l'information de configuration est réalisée par une équipe de maintenance.

L'équipe de maintenance transmet à l'équipement EQᵢ une nouvelle configuration de l'équipement EQᵢ qui transmet à son tour cette nouvelle configuration au noeud de communication Nⱼ. Un émetteur du noeud de communication Nⱼ inscrit la nouvelle configuration dans un mémoire de l'étiquette radio ETᵢ ou modifie une configuration stockée dans la mémoire de l'étiquette radio ETᵢ.

Une étiquette radio est un dispositif passif qui ne requiert pas d'alimentation en énergie en continu. Une information stockée dans la mémoire qu'elle comporte est consultable à distance par un noeud de communication ou un lecteur/marqueur d'étiquette conformé pour lire des données stockées sur une étiquette radio. Une consultation du contenu d'une étiquette radio comporte les étapes suivantes : un noeud de communication transmet un message comportant une requête de lecture d'informations désirées à l'étiquette radio ETᵢ. Le message comporte une énergie E : une fraction de l'énergie E est employée par l'étiquette radio pour alimenter en énergie les composants que comporte l'étiquette radio ETᵢ (récepteur, mémoire et émetteur), pour interpréter la requête en commandes et pour exécuter les commandes comme par exemple faire délivrer les informations désirées par l'émetteur de l'étiquette radio ETᵢ.

Ainsi, selon la nature des données envoyées par un noeud Nᵢ, soit les données sont reçues par le récepteur ERᵢ de l'étiquette radio ETᵢ destinataire du message puis stockées dans la mémoire MEᵢ de cette étiquette soit l'émetteur EEᵢ délivre par une liaison sans contact des données stockées préalablement dans sa mémoire MEᵢ.

Les équipements EQᵢ sont protégés des chocs et des environnements sévères par des boîtiers BPᵢ, c'est le cas par exemple pour des calculateurs aéronautiques qui sont répartis dans des châssis équipant des soutes d'un aéronef. Les équipements EQᵢ sont intégrés au systèmes par une connexion amovible au châssis. Les étiquettes radio ETᵢ d'un dispositif selon l'invention peuvent être, par exemple, fixés sur une paroi externe du boîtier de protection BPᵢ et accessibles à l'équipe de maintenance sans que le boîtier soit extrait du châssis.

Le dispositif selon l'invention présente en outre un effet avantageux au niveau de la gestion de la maintenance des équipements. Cet effet avantageux consiste en une accélération et une systématisation des transferts d'informations de défaillances d'équipements à destination du constructeur des équipements.

Par les aspects décrits plus haut, le dispositif selon l'invention est employé pour gérer la maintenance des équipements intégrés à un système, il sert également à gérer la configuration des équipements et plus précisément à s'assurer lors d'un montage d'un équipement sur un système, ou lors d'un remplacement d'un équipement d'un système, que la configuration d'un équipement EQᵢ que l'on intègre à un système est compatible de la configuration applicable du système définie par le constructeur du système.

Lors d'une livraison d'un système comportant un dispositif selon l'invention, le constructeur du système définit une première information de configuration applicable du système et une deuxième information d'identification du système qu'il stocke dans le concentrateur de données C, Au cours de la vie du système, la configuration applicable du système peut être modifiée, par exemple à la suite d'évolution de configuration d'un des équipements intégré au système.

Il est utile que l'équipe de maintenance ait connaissance de la première information et de la deuxième information, pour analyser par des recoupements, si une défaillance d'un équipement particulier est liée à la configuration du système dans lequel il est intégré. Aussi, la première et la deuxième informations sont transmises automatiquement aux étiquettes radios du dispositif, via les liaisons filaires et les noeuds de communication, lors d'une procédure qui accompagne chaque interruption d'alimentation en énergie du système. Ainsi, lors d'une opération d'entretien, une équipe de maintenance aura accès à ces informations, facilement en consultant le contenu de la mémoire d'une étiquette radio à l'aide d'un lecteur/marqueur d'étiquette radio.

Le constructeur du système communique une première information de configuration applicable du système et une deuxième information d'identification du système au calculateur principal lors d'une livraison du système.

Avantageusement, le calculateur principal RC (2) comporte des moyens pour transmettre, via les noeuds de communication Ni (12, 22, 32), la première information et la deuxième information à toutes les étiquettes radio ETᵢ (11, 21, 31 ), à chaque interruption d'alimentation en énergie du système.

Avantageusement, le calculateur principal RC (2) comporte des moyens de détection d'une incompatibilité entre une information de configuration d'un équipement EQᵢ (10, 20, 30) et la première information de configuration.

Avantageusement, le calculateur principal RC (2) comporte des moyens de détection d'une incompatibilité entre une information de configuration d'un équipement EQi (10, 20, 30) et la première information de configuration.

Avantageusement, le calculateur principal RC (2) transmet à l'étiquette ETᵢ (11, 21, 31 ), à chaque interruption d'alimentation en énergie du système, via les noeuds de communication Nⱼ (12, 22, 32), des troisièmes informations sur une durée de fonctionnement de l'équipement EQᵢ (10, 20, 30) et des quatrièmes informations sur une durée d'alimentation en énergie de l'équipement EQᵢ (10, 20, 30), et en ce que les troisièmes informations et les quatrièmes informations sont stockées dans une mémoire de l'étiquette ETᵢ (11, 21, 31).

L'équipements EQᵢ (10, 20, 30) comporte un dispositif de test intégrés BITEᵢ produisant des résultats de tests de fonctionnement de l'équipement EQᵢ et délivrant des messages de résultats de test qui synthétisent des informations sur un état de fonctionnement de l'équipement EQᵢ à destination d'un calculateur principal RC (2) via un réseau de communication du système

Avantageusement, pendant que le système (1) est en fonctionnement, le dispositif BITEᵢ délivre, via le noeud de communication Nᵢ (12, 22, 32), la totalité des résultats de tests de fonctionnement de l'équipement EQᵢ (10, 20, 30) à l'étiquette radio ETᵢ (11, 21, 31) via le noeud de communication Nᵢ et en ce que le calculateur principal RC (2) transmet des messages de résultats de test synthétisant des informations sur un état de fonctionnement des équipements EQᵢ (10, 20, 30) du système.

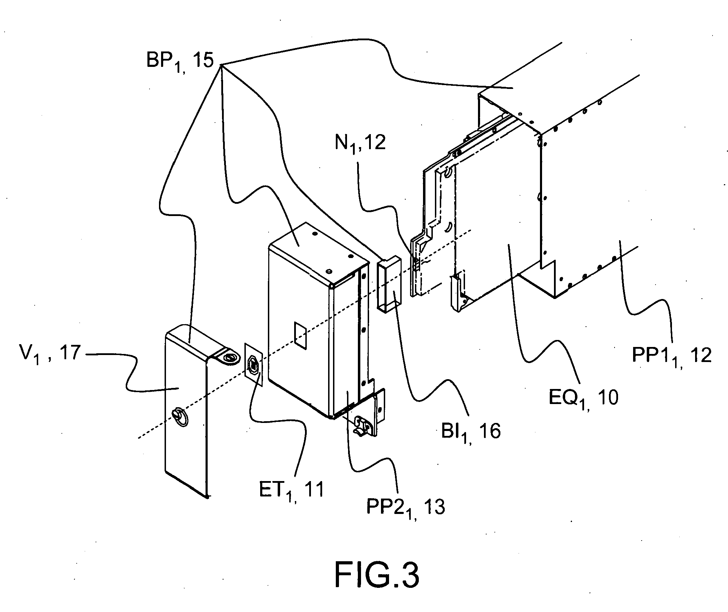

La figure 3 représente une vue perspective en éclaté d'un premier mode de réalisation d'un dispositif de gestion de maintenance selon l'invention lié à un équipement EQ₁. L'équipement EQ₁ est inséré dans un boîtier de protection BP₁ qui comporte une première armature PP1₁, 12, une deuxième armature PP2₁, 13, des moyens d'isolation électromagnétique Blᵢ, 16 et des moyens amovibles d'obturation V₁, 17. La première armature et la deuxième armature coopèrent pour former une première cavité, de forme parallélépipédique pouvant héberger l'équipement EQ₁ qui est par exemple une carte de circuits imprimés comportant des circuits électroniques. La deuxième armature PP2₁ comporte une encoche formant une ouverture dans la première cavité.

Le dispositif de gestion de maintenance selon l'invention comporte une étiquette radio ET₁ et un noeud de communication N₁. Le noeud de communication N₁ occupe une position interne à la première cavité et il est conformé pour échanger des données avec l'étiquette radio ET₁. Les moyens d'isolation électromagnétique protègent l'équipement EQ₁ des émissions électromagnétiques produites par le noeud de communication N₁ de. L'étiquette radio ET₁ est positionnée sur la deuxième armature PP2₁, de façon à obstruer l'encoche.

L'étiquette radio ET₁ et le noeud de communication N₁ sont enfermés dans une deuxième cavité formée par les moyens amovibles d'obturation V₁ et les moyens d'isolation électromagnétique. Les moyens amovibles d'obturation V₁ sont soit dans un état fermé soit dans un état ouvert.

La deuxième cavité est close lorsque les moyens amovibles d'obturation V₁ sont dans l'état fermé et ouverte lorsque les moyens amovibles d'obturation V₁ sont dans l'état ouvert.

Avantageusement, l'échange de données entre l'étiquette radio ETᵢ et le noeud Nⱼ est réalisé au moyen d'une liaison sans contact.

Avantageusement, les moyens amovibles d'obturation comportent un volet inclinable Vᵢ l'état ouvert des moyens amovibles d'obturation correspond à une position du volet V₁ dans laquelle l'étiquette radio ETᵢ est visible de l'extérieur du boîtier, l'état fermé des moyens amovibles d'obturation correspond à une position du volet V₁ dans laquelle l'étiquette radio ETᵢ est invisible de l'extérieur du boîtier.

Lorsque les moyens amovibles d'obturation V₁ sont dans l'état ouvert, l'étiquette radio ET₁ n'est pas protégée contre des chocs mécaniques mais une équipe de maintenance peut lire le contenu de la mémoire qu'elle comporte grâce à un lecteur/marqueur d'étiquette radio placé à proximité de l'étiquette. A l'inverse, lorsque les moyens amovibles d'obturation V₁ sont dans l'état fermé, l'étiquette radio ET₁ est protégée des chocs mécaniques mais une équipe de maintenance ne peut pas lire le contenu de la mémoire qu'elle comporte.

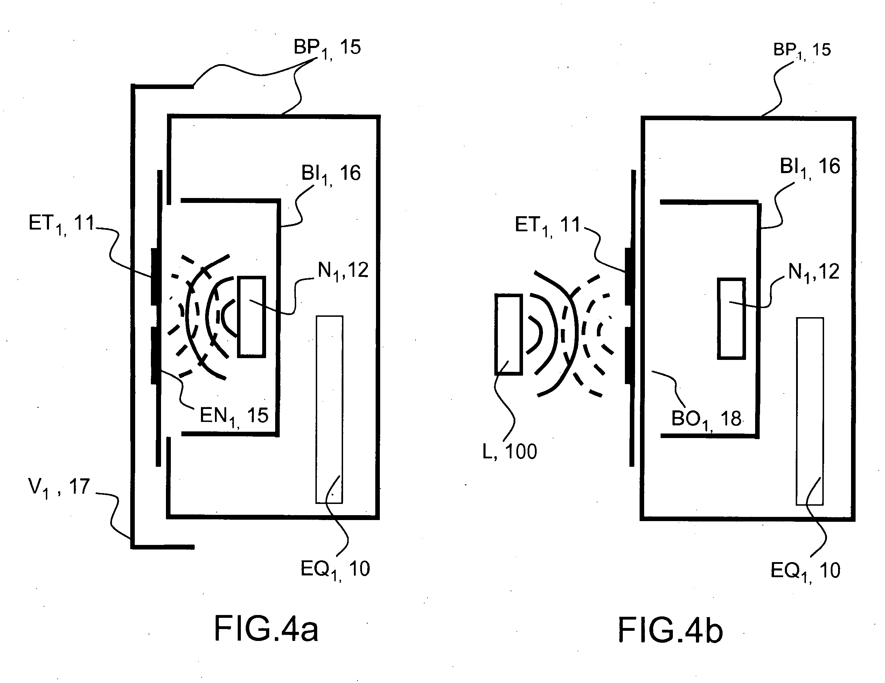

La figure 4a représente schématiquement, en vue de coupe, le premier mode de réalisation du dispositif selon l'invention comportant des moyens amovibles d'obturation en état fermé.

Sur cette figure comme sur les suivantes, la première cavité est représentée d'un seul tenant par soucis de simplification.

Lorsque les moyens amovibles d'obturation V₁ sont dans l'état fermé, le noeud de communication N₁ peut échanger des données par une liaison sans contact avec l'étiquette radio ET₁.

La liaison sans contact est représentée par des arcs de cercles concentriques. Les arcs en traits pleins représentent une onde radio émise par le noeud de communication N₁ et reçue par l'étiquette radio ET₁. Les arcs en traits pointillés représentent une onde radio émise par l'étiquette radio ET₁ et reçue par le noeud de communication N₁.

La figure 4b représente schématiquement, en vue de coupe, le premier mode de réalisation du dispositif selon l'invention comportant des moyens amovibles d'obturation en état ouvert.

Lorsque les moyens amovibles d'obturation V₁ sont dans l'état ouvert, le lecteur/marqueur d'étiquette radio L, 100 peut en outre inscrire ou lire des données dans la mémoire de l'étiquette radio ET₁ par une liaison sans contact. Les arcs en traits pleins représentent une onde radio émise par le lecteur/marqueur d'étiquette radio L et reçue par l'étiquette radio ET₁. Les arcs en traits pointillés représentent une onde radio émise par l'étiquette radio ET₁ et reçue par le lecteur/marqueur d'étiquette radio L.

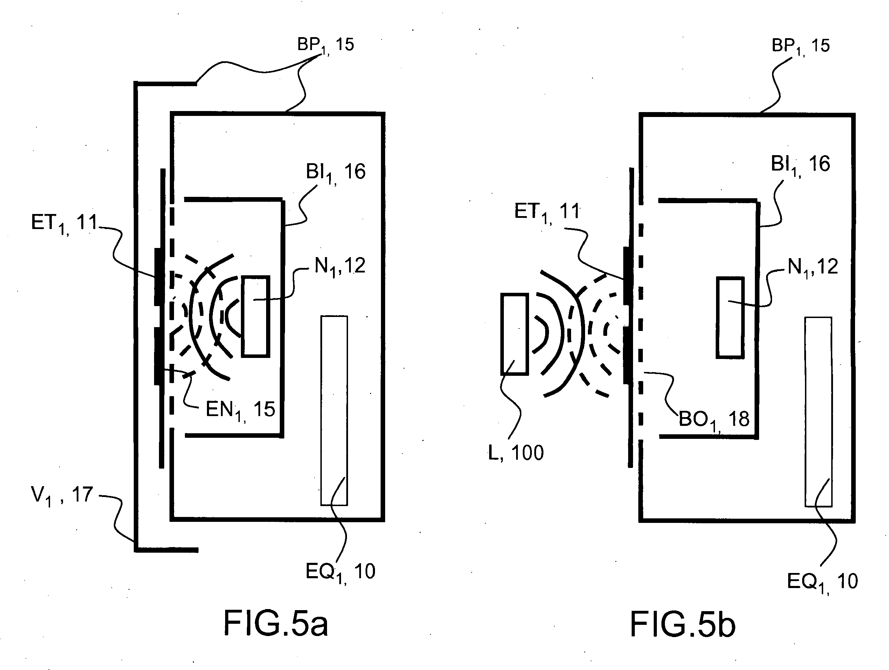

Les figure 5a et 5b représentent schématiquement, en vue de coupe, un deuxième mode de réalisation du dispositif selon l'invention comportant des moyens amovibles d'obturation en état fermé et ouvert respectivement.

Le deuxième mode de réalisation du dispositif selon l'invention diffère du premier mode de réalisation en ce que l'encoche figurant sur la première cavité est obstruée par un bouchon dans un matériau conducteur électrique, l'étiquette radio ET₁ étant disposée au dessus du bouchon à l'extérieur de la première cavité.

L'avantage apporté par ce mode de réalisation est un renforcement d'une protection mécanique de l'étiquette radio ET₁.

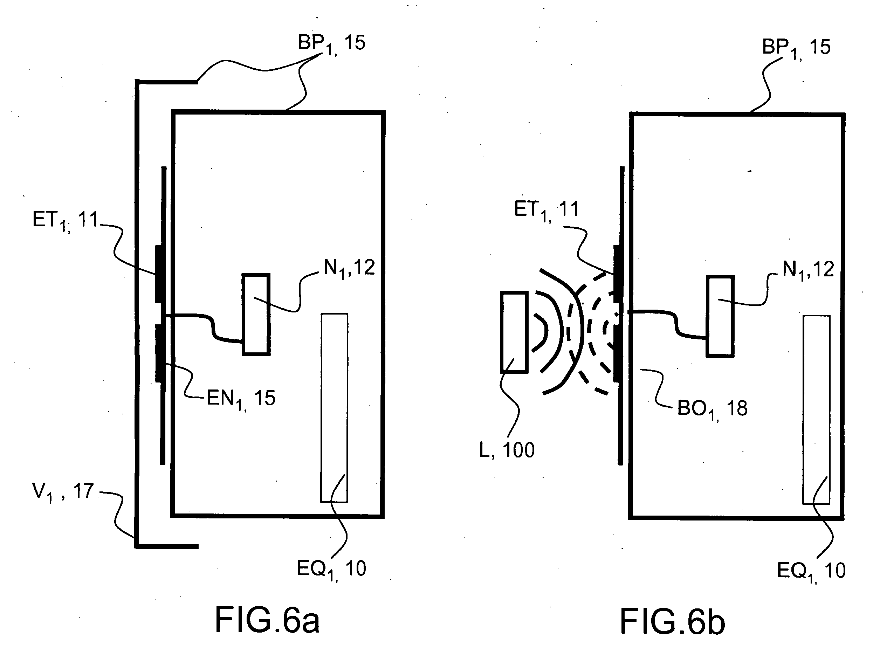

Les figure 6a et 6b représentent schématiquement, en vue de coupe, un troisième mode de réalisation du dispositif selon l'invention comportant des moyens amovibles d'obturation en état fermé et ouvert respectivement.

Le troisième mode de réalisation du dispositif selon l'invention diffère du premier mode en ce que l'échange de données entre l'étiquette radio ETᵢ le noeud Nⱼ est réalisé au moyen d'une liaison filaire. Dans ce mode de réalisation, l'étiquette ETᵢ comporte, en outre, un deuxième récepteur RE2ᵢ qui est conformé pour recevoir des données provenant d'une liaison filaire et un deuxième émetteur EE2ᵢ qui est conformé pour émettre des données sur une liaison filaire. Lesdits deuxième émetteur EE2ᵢ et deuxième récepteur RE2ᵢ sont connectés d'une part à la mémoire MEᵢ et d'autre part à la liaison filaire.

Avantageusement, l'échange de données entre l'étiquette radio ETᵢ et le noeud Nⱼ est réalisé au moyen d'une liaison filaire et en ce que les moyens d'isolation électromagnétique sont constituées par des parois du boîtier de protection BPᵢ.

Par ailleurs, le récepteur RNᵢ du noeud de communication Nᵢ est conformé pour recevoir des données provenant d'une liaison filaire et l'émetteur ENᵢ est conformé pour émettre des données sur une liaison filaire. L'émetteur ENᵢ et le récepteur RNᵢ sont connectés à la liaison filaire.

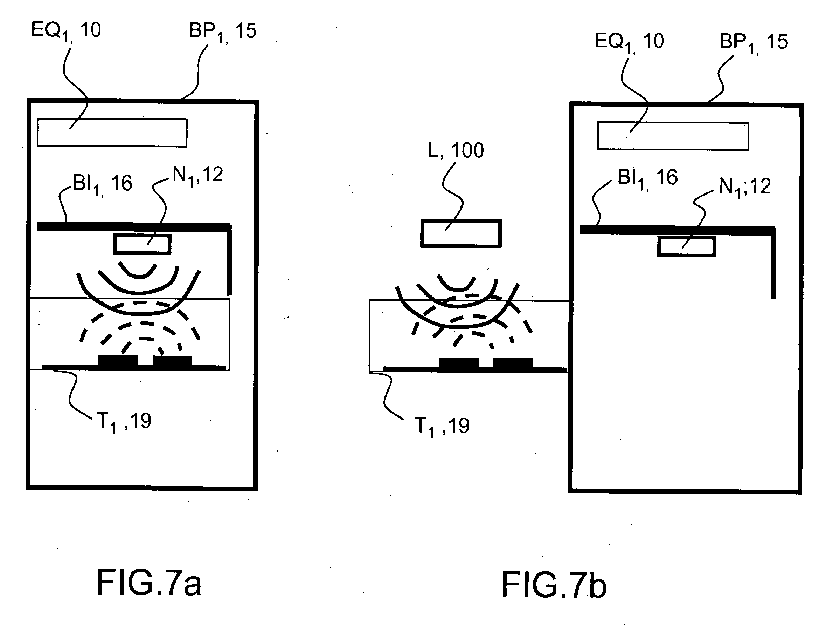

Les figure 7a et 7b représentent schématiquement, en vue de coupe, un quatrième mode de réalisation du dispositif selon l'invention comportant des moyens amovibles d'obturation en état fermé et ouvert respectivement.

Avantageusement, les moyens amovibles d'obturation comportent un tiroir glissant Tᵢ et en ce que l'état ouvert correspond à une position du tiroir dans laquelle l'étiquette radio ETᵢ est visible de l'extérieur du boîtier et que l'état fermé correspond à une position du tiroir dans laquelle l'étiquette radio ETᵢ est invisible de l'extérieur du boîtier.

## Revendications

1. Dispositif de gestion de maintenance d'un nombre N d'équipements EQi (10, 20, 30) intégrés à un système (1), i désignant un indice d'identification de l'équipement EQi (10, 20, 30) et étant compris entre 1 et N, le système (1) comportant en outre un calculateur principal RC (2), les équipements EQᵢ (10, 20, 30) échangeant des données avec le calculateur principal RC (2) par un réseau de communication, les équipements EQᵢ (10, 20, 30) étant susceptibles d'être intégrés au système (1) ou d'être retirés hors du système (1), chaque équipement EQᵢ (10, 20, 30) étant protégé par un boîtier de protection BPᵢ, le noeud de communication Nⱼ (12, 22, 32) occupant une position interne au boîtier BPᵢ et étant conformé pour échanger des données avec l'étiquette radio ETᵢ (11, 21, 31), l'étiquette radio ETᵢ (11, 21, 31) étant fixée solidairement au boîtier BPᵢ et étant conformée pour échanger des données par une liaison sans contact,
**caractérisé en ce que** le boîtier BPᵢ comporte :
- des moyens d'isolation électromagnétique du noeud de communication Nᵢ (12, 22, 32) qui protègent l'équipement EQᵢ d'émissions électromagnétiques produites par le noeud de communication Nᵢ (12, 22, 32);
- des moyens amovibles d'obturation qui masquent l'étiquette radio ETᵢ (11, 21, 31) par rapport à l'extérieur du boîtier BPᵢ, les moyens d'obturation étant dans un état fermé ou dans un état ouvert ;
et **en ce que** le noeud de communication Nᵢ (12, 22, 32) et l'étiquette ETᵢ (10, 20, 30) sont à l'intérieur d'une cavité formée par les moyens d'isolation électromagnétique et les moyens amovibles d'obturation, la cavité est close lorsque les moyens amovibles d'obturation sont dans un état fermé.

2. Dispositif selon la revendication 1, **caractérisé en ce que,** lorsque les moyens amovibles d'obturation sont dans l'état fermé, ils empêchent l'étiquette radio ETᵢ (11, 21, 31) de délivrer des données à l'extérieur du boîtier BPᵢ.

3. Dispositif selon l'une des revendications 1 à 2, **caractérisé en ce que** les moyens amovibles d'obturation comportent un volet inclinable Vᵢ et **en ce que** l'état ouvert correspond à une position du volet dans laquelle l'étiquette radio ETᵢ (11, 21, 31) est visible de l'extérieur du boîtier, et que l'état fermé correspond à une position du volet dans laquelle l'étiquette radio ETᵢ (11, 21, 31) est invisible de l'extérieur du boîtier.

4. Dispositif selon l'une des revendications 1 à 2, **caractérisé en ce que** les moyens amovibles d'obturation comportent un tiroir glissant Tᵢ et **en ce que** l'état ouvert correspond à une position du tiroir dans laquelle l'étiquette radio ETᵢ (11, 21, 31) est visible de l'extérieur du boîtier et que l'état fermé correspond à une position du tiroir dans laquelle l'étiquette radio ETᵢ (11, 21, 31) est invisible de l'extérieur du boîtier.

5. Dispositif selon l'une des revendications 1 à 4 **caractérisé en ce que** l'étiquette radio ETᵢ (11, 21, 31) comporte :
- un récepteur REᵢ de données délivrées par un noeud de communication Nⱼ (12, 22, 32);
- une mémoire MEᵢ pour stocker des données ;
- un émetteur EEⱼ pour délivrer des données à un noeud de communication Nⱼ (12, 22, 32), sur requête ;

6. Dispositif selon l'une des revendications 1 à 5, **caractérisé en ce que** l'échange de données entre l'étiquette radio ETᵢ (11, 21, 31) et le noeud de communication Nⱼ (12, 22, 32) est réalisé au moyen d'une liaison sans contact.

7. Dispositif selon l'une des revendications 1 à 6 **caractérisé en ce que** le noeud de communication Nᵢ (12, 22, 32) comporte :
- un récepteur, RNᵢ de données délivrées par une étiquette radio ;
- un émetteur ENᵢ pour délivrer des données à une étiquette radio.

8. Dispositif selon l'une des revendications 1 à 7, le constructeur du système communiquant une première information de configuration applicable du système et une deuxième information d'identification du système au calculateur principal lors d'une livraison du système, **caractérisé en ce que** le calculateur principal RC (2) comporte des moyens pour transmettre, via les noeuds de communication Ni (12, 22, 32), la première information et la deuxième information à toutes les étiquettes radio ETᵢ (11, 21, 31), à chaque interruption d'alimentation en énergie du système.

9. Dispositif selon l'une des revendications 1 à 8, **caractérisé en ce que** le calculateur principal RC (2) comporte des moyens de détection d'une incompatibilité entre une information de configuration d'un équipement EQᵢ (10, 20, 30) et la première information de configuration.

10. Dispositif selon l'une des revendications 1 à 9 **caractérisé en ce que** des données stockées sur l'étiquette radio ETᵢ (11, 21, 31) sont accessibles lorsque l'équipement EQᵢ (10, 20, 30) n'est pas alimenté en énergie ou lorsque l'équipement EQᵢ (10, 20, 30) n'est pas intégré dans le système (1).

11. Dispositif selon l'une des revendications 1 à 10 **caractérisé en ce que** le calculateur principal RC (2) transmet à l'étiquette ETᵢ (11, 21, 31), à chaque interruption d'alimentation en énergie du système, via les noeuds de communication Nⱼ (12, 22, 32), des troisièmes informations sur une durée de fonctionnement de l'équipement EQᵢ (10, 20, 30) et des quatrièmes informations sur une durée d'alimentation en énergie de l'équipement EQᵢ (10, 20, 30), et **en ce que** les troisièmes informations et les quatrièmes informations sont stockées dans une mémoire de l'étiquette ETᵢ (11, 21,31).

12. Dispositif selon l'une des revendications 1 à 11, l'équipements EQᵢ (10, 20, 30) comportant un dispositif de test intégrés BITEᵢ, un dispositif BITEᵢ produisant des résultats de tests de fonctionnement de l'équipement EQᵢ (10, 20, 30) et délivrant des messages de résultats de test synthétisant des informations sur un état de fonctionnement de l'équipement EQᵢ (10, 20, 30) à destination d'un calculateur principal RC (2) via un réseau de communication du système, **caractérisé en ce que,** pendant que le système (1) est en fonctionnement, le dispositif BITEᵢ délivre, via le noeud de communication Nᵢ (12, 22, 32), la totalité des résultats de tests de fonctionnement de l'équipement EQᵢ (10, 20, 30) à l'étiquette radio ETᵢ (11, 21, 31) via le noeud de communication Nᵢ et **en ce que** le calculateur principal RC (2) transmet des messages de résultats de test synthétisant des informations sur un état de fonctionnement des équipements EQᵢ (10, 20, 30) du système.

13. Dispositif selon l'une des revendications 1 à 5, **caractérisé en ce que** l'échange de données entre l'étiquette radio ETᵢ (11, 21, 31) et le noeud Nⱼ (12, 22, 32) est réalisé au moyen d'une liaison filaire et **en ce que** les moyens d'isolation électromagnétique sont constituées par des parois du boîtier de protection BPᵢ.

14. Procédé de gestion de maintenance d'un nombre N d'équipements EQᵢ intégrés à un système (1), i désignant un indice d'identification de l'équipement EQᵢ (10, 20, 30) et étant compris entre 1 et N, l'équipement EQᵢ (10, 20, 30) comportant un dispositif de test intégrés BITEᵢ, le dispositif BITEᵢ délivrant à un calculateur principal RC (2) du système (1) des messages de résultats de test, via un réseau de communication du système (1), chaque équipement EQᵢ (10, 20, 30) comportant un noeud de communication Nᵢ (12, 22, 32) et une étiquette ETᵢ (11, 21, 31) et étant protégé par un boîtier de protection BPᵢ, le noeud de communication Nⱼ (12, 22, 32) occupant une position interne au boîtier BPᵢ et étant conformé pour échanger des données avec l'étiquette radio ETᵢ (11, 21, 31), l'étiquette radio ETᵢ (11, 21, 31) étant fixée solidairement au boîtier BPᵢ et étant conformée pour échanger des données par une liaison sans contact, ledit procédé étant mis en oeuvre par un dispositif selon l'une des revendications précédentes, ledit procédé étant **caractérisé en ce qu'**il comporte les étapes :
- transmission par le dispositif BITEᵢ à l'étiquette ETᵢ (11, 21, 31), via les noeuds de communication Nⱼ (12, 22, 32), des résultats de tests;
- stockage des résultats de test dans une mémoire de l'étiquette ETᵢ (11, 21, 31).

## Claims

1. Device for managing maintenance of a number N of items of equipment EQi (10, 20, 30) built into a system (1), i designating an index identifying the item of equipment EQi (10, 20, 30) and lying between 1 and N, the system (1) furthermore comprising a main computer RC (2), the equipment EQᵢ (10, 20, 30) exchanging data with the main computer RC (2) through a communication network, the equipment EQᵢ (10, 20, 30) being capable of being built into the system (1) or of being removed from the system (1), each item of equipment EQᵢ (10, 20, 30) being protected by a protective housing BPᵢ, the communication node Nⱼ (12, 22, 32) occupying a position internal to the housing BPᵢ and being devised to exchange data with the radio tag ETᵢ (11, 21, 31), the radio tag ETᵢ (11, 21, 31) being fixed securely to the housing BPᵢ and being devised to exchange data through a contactless link,
**characterized in that** the housing BPᵢ comprises:
- means of electromagnetic isolation of the communication node Nᵢ (12, 22, 32) which protect the item of equipment EQᵢ from electromagnetic emissions produced by the communication node Nᵢ (12, 22, 32);
- removable plugging means which mask the radio tag ETᵢ (11, 21, 31) with respect to the exterior of the housing BPᵢ, the plugging means being in a closed state or in an open state;
and **in that** the communication node Nᵢ (12, 22, 32) and the tag ETᵢ (10, 20, 30) are inside a cavity formed by the means of electromagnetic isolation and the removable plugging means, the cavity is sealed when the removable plugging means are in a closed state.

2. Device according to Claim 1, **characterized in that,** when the removable plugging means are in the closed state, they prevent the radio tag ETᵢ (11, 21, 31) from delivering data outside the housing BPᵢ.

3. Device according to either of Claims 1 and 2, **characterized in that** the removable plugging means comprise a tiltable flap Vᵢ and **in that** the open state corresponds to a position of the flap in which the radio tag ETᵢ (11, 21, 31) is visible from outside the housing, and that the closed state corresponds to a position of the flap in which the radio tag ETᵢ (11, 21, 31) is invisible from outside the housing.

4. Device according to either of Claims 1 and 2, **characterized in that** the removable plugging means comprise a sliding drawer Tᵢ and **in that** the open state corresponds to a position of the drawer in which the radio tag ETᵢ (11, 21, 31) is visible from outside the housing and that the closed state corresponds to a position of the drawer in which the radio tag ETᵢ (11, 21, 31) is invisible from outside the housing.

5. Device according to one of Claims 1 to 4 **characterized in that** the radio tag ETᵢ (11, 21, 31) comprises:
- a receiver REᵢ of data delivered by a communication node Nⱼ (12, 22, 32);
- a memory MEⱼ for storing data;
- an emitter EEⱼ for delivering data to a communication node Nⱼ (12, 22, 32), on request.

6. Device according to one of Claims 1 to 5, **characterized in that** the exchange of data between the radio tag ETᵢ (11, 21, 31) and the communication node Nⱼ (12, 22, 32) is carried out by means of a contactless link.

7. Device according to one of Claims 1 to 6 **characterized in that** the communication node Nᵢ (12, 22, 32) comprises:
- a receiver, RNᵢ of data delivered by a radio tag;
- an emitter ENᵢ for delivering data to a radio tag.

8. Device according to one of Claims 1 to 7, the manufacturer of the system communicating a first information cue regarding applicable configuration of the system and a second information cue regarding identification of the system to the main computer during shipment of the system, **characterized in that** the main computer RC (2) comprises means for transmitting, via the communication nodes Ni (12, 22, 32), the first information cue and the second information cue to all the radio tags ETᵢ (11, 21, 31), on each interruption of the system power supply.

9. Device according to one of Claims 1 to 8, **characterized in that** the main computer RC (2) comprises means for detecting an incompatibility between a configuration information cue relating to an item of equipment EQᵢ (10, 20, 30) and the first configuration information cue.

10. Device according to one of Claims 1 to 9 **characterized in that** data stored on the radio tag ETᵢ (11, 21, 31) are accessible when the item of equipment EQᵢ (10, 20, 30) is not supplied with power or when the item of equipment EQᵢ (10, 20, 30) is not built into the system (1).

11. Device according to one of Claims 1 to 10 **characterized in that** the main computer RC (2) transmits to the tag ETᵢ (11, 21, 31), on each interruption of the system power supply, via the communication nodes Nⱼ (12, 22, 32), third information cues regarding a duration of operation of the item of equipment EQᵢ (10, 20, 30) and fourth information cues regarding a duration of power supply of the item of equipment EQᵢ (10, 20, 30), and **in that** the third information cues and the fourth information cues are stored in a memory of the tag ETᵢ (11, 21, 31).

12. Device according to one of Claims 1 to 11, the equipment EQᵢ (10, 20, 30) comprising a built-in test device BITEᵢ, a device BITEᵢ producing results of operational tests of the item of equipment EQᵢ (10, 20, 30) and delivering test results messages summarizing information cues regarding an operating state of the item of equipment EQᵢ (10, 20, 30) destined for a main computer RC (2) via a communication network of the system, **characterized in that,** while the system (1) is operational, the device BITEᵢ delivers, via the communication node Mᵢ (12, 22, 32), the entirety of the results of operational tests of the item of equipment EQᵢ (10, 20, 30) to the radio tag ETᵢ (11, 21, 31) and **in that** the main computer RC (2) transmits test results messages summarizing information cues regarding an operating state of the equipment EQᵢ (10, 20, 30) of the system.

13. Device according to one of Claims 1 to 5, **characterized in that** the exchange of data between the radio tag ETᵢ (11, 21, 31) and the node Nⱼ (12, 22, 32) is carried out by means of a wire-based link and **in that** the means of electromagnetic isolation consist of walls of the protective housing BPᵢ.

14. Method of managing maintenance of a number N of items of equipment EQᵢ built into a system (1), i designating an index identifying the item of equipment EQᵢ (10, 20, 30) and lying between 1 and N, the item of equipment EQᵢ (10, 20, 30) comprising a built-in test device BITEᵢ, the device BITEᵢ delivering test results messages to a main computer RC (2) of the system (1), via a communication network of the system (1), each item of equipment EQᵢ (10, 20, 30) comprising a communication node Nᵢ (12, 22, 32) and a tag ETᵢ (11, 21, 31) and being protected by a protective housing BPᵢ, the communication node Nⱼ (12, 22, 32) occupying a position internal to the housing BPᵢ and being devised to exchange data with the radio tag ETᵢ (11, 21, 31), the radio tag ETᵢ (11, 21, 31) being fixed securely to the housing BPᵢ and being devised to exchange data through a contactless link, the said method being implemented by a device according to one of the preceding claims,
the said method being **characterized in that** it comprises the steps:
- transmission by the device BITEᵢ to the tag ETᵢ (11, 21, 31), via the communication nodes Nⱼ (12, 22, 32), of the test results;
- storage of the test results in a memory of the tag ETᵢ (11, 21, 31).

## Patentansprüche

1. Vorrichtung zur Wartungsverwaltung einer Anzahl N von in ein System (1) integrierten Einrichtungen EQᵢ (10, 20, 30), wobei i einen Identifikationsindex der Einrichtung EQᵢ (10, 20, 30) bezeichnet und zwischen 1 und N liegt, wobei das System (1) außerdem einen Hauptrechner RC (2) aufweist, wobei die Einrichtungen EQᵢ (10, 20, 30) über ein Kommunikationsnetz Daten mit dem Hauptrechner RC (2) austauschen, wobei die Einrichtungen EQᵢ (10, 20, 30) in das System (1) integriert oder aus dem System (1) entnommen werden können, wobei jede Einrichtung EQᵢ (10, 20, 30) von einem Schutzgehäuse BPᵢ geschützt wird, wobei der Kommunikationsknoten Nⱼ (12, 22, 32) eine Position innerhalb des Gehäuses BPᵢ einnimmt und angepasst ist, um Daten mit dem Funk-Etikett ETᵢ (11, 21, 31) auszutauschen, wobei das Funk-Etikett ETᵢ (11, 21, 31) fest mit dem Gehäuse BPᵢ verbunden und gestaltet ist, um Daten über eine kontaktlose Verbindung auszutauschen,
**dadurch gekennzeichnet, dass** das Gehäuse BPᵢ aufweist:
- Mittel zur elektromagnetischen Isolierung des Kommunikationsknotens Nᵢ (12, 22, 32), die die Einrichtung EQᵢ vor elektromagnetischen Emissionen schützen, die von dem Kommunikationsknoten Nᵢ (12, 22, 32) erzeugt werden;
- entfernbare Verschlussmittel, die das Funk-Etikett ETᵢ (11, 21, 31) gegenüber der Außenumgebung des Gehäuses BPᵢ verdecken, wobei die Verschlussmittel in einem geschlossenen oder einem offenen Zustand sind;
und dass der Kommunikationsknoten Nᵢ (12, 22, 32) und das Etikett ETᵢ (10, 20, 30) sich innerhalb eines Hohlraums befinden, der von den Mittel zur elektromagnetischen Isolierung und den entfernbaren Verschlussmitteln geformt wird, wobei der Hohlraum geschlossen ist, wenn die entfernbaren Verschlussmittel in einem geschlossenen Zustand sind.

2. Vorrichtung nach Anspruch 1, **dadurch gekennzeichnet, dass** die entfernbaren Verschlussmittel, wenn sie im geschlossenen Zustand sind, das Funk-Etikett ETᵢ (11, 21, 31) daran hindern, Daten außerhalb des Gehäuses BPᵢ zu liefern.

3. Vorrichtung nach einem der Ansprüche 1 bis 2, **dadurch gekennzeichnet, dass** die entfernbaren Verschlussmittel eine neigbare Klappe Vᵢ aufweisen, und dass der offene Zustand einer Stellung der Klappe entspricht, in der das Funk-Etikett ETᵢ (11, 21, 31) von außerhalb des Gehäuses sichtbar ist, und dass der geschlossene Zustand einer Stellung der Klappe entspricht, in der das Funk-Etikett ETᵢ (11, 21, 31) von außerhalb des Gehäuses unsichtbar ist.

4. Vorrichtung nach einem der Ansprüche 1 bis 2, **dadurch gekennzeichnet, dass** die entfernbaren Verschlussmittel einen gleitenden Einschub Tᵢ aufweisen, und dass der offene Zustand einer Stellung des Einschubs entspricht, in der das Funk-Etikett ETᵢ (11, 21, 31) von außerhalb des Gehäuses sichtbar ist, und dass der geschlossene Zustand einer Stellung des Einschubs entspricht, in der das Funk-Etikett ETᵢ (11, 21, 31) von außerhalb des Gehäuses unsichtbar ist.

5. Vorrichtung nach einem der Ansprüche 1 bis 4, **dadurch gekennzeichnet, dass** das Funk-Etikett ETᵢ (11, 21, 31) aufweist:
- einen Empfänger REᵢ von Daten, die von einem Kommunikationsknoten Nⱼ (12, 22, 32) geliefert werden;
- einen Speicher MEᵢ zum Speichern von Daten;
- einen Sender EEⱼ zum Liefern von Daten an einen Kommunikationsknoten Nⱼ (12, 22, 32) auf Anforderung.

6. Vorrichtung nach einem der Ansprüche 1 bis 5, **dadurch gekennzeichnet, dass** der Datenaustausch zwischen dem Funk-Etikett ETᵢ (11, 21, 31) und dem Kommunikationsknoten Nⱼ (12, 22, 32) mittels einer kontaktlosen Verbindung durchgeführt wird.

7. Vorrichtung nach einem der Ansprüche 1 bis 6, **dadurch gekennzeichnet, dass** der Kommunikationsknoten Nᵢ (12, 22, 32) aufweist:
- einen Empfänger RNᵢ von von einem Funk-Etikett gelieferten Daten;
- einen Sender ENᵢ, um Daten an ein Funk-Etikett zu liefern.

8. Vorrichtung nach einem der Ansprüche 1 bis 7, wobei der Hersteller des Systems eine erste anwendbare Konfigurationsinformation des Systems und eine zweite Identifikationsinformation des Systems bei einer Lieferung des Systems an den Hauptrechner übermittelt, **dadurch gekennzeichnet, dass** der Hauptrechner RC (2) Mittel aufweist, um bei jeder Energieversorgungsunterbrechung des Systems die erste Information und die zweite Information über die Kommunikationsknoten N₁ (12, 22, 32) an alle Funk-Etiketten ETᵢ (11, 21, 31) zu übertragen.

9. Vorrichtung nach einem der Ansprüche 1 bis 8, **dadurch gekennzeichnet, dass** der Hauptrechner RC (2) Mittel zur Erfassung einer Inkompatibilität zwischen einer Konfigurationsinformation einer Einrichtung EQᵢ (10, 20, 30) und der ersten Konfigurationsinformation aufweist.

10. Vorrichtung nach einem der Ansprüche 1 bis 9, **dadurch gekennzeichnet, dass** im Funk-Etikett ETᵢ (11, 21, 31) gespeicherte Daten zugänglich sind, wenn die Einrichtung EQᵢ (10, 20, 30) nicht mit Energie versorgt wird oder wenn die Einrichtung EQᵢ (10, 20, 30) nicht in das System (1) integriert ist.

11. Vorrichtung nach einem der Ansprüche 1 bis 10, **dadurch gekennzeichnet, dass** der Hauptrechner RC (2) bei jeder Energieversorgungsunterbrechung des Systems über die Kommunikationsknoten Nⱼ (12, 22, 32) dritte Informationen über eine Betriebsdauer der Einrichtung EQᵢ (10, 20, 30) und vierte Informationen über eine Energieversorgungsdauer der Einrichtung EQᵢ (10, 20, 30) an das Etikett ETᵢ (11, 21, 31) überträgt, und dass die dritten und die vierten Informationen in einem Speicher des Etiketts ETᵢ (11, 21, 31) gespeichert werden.

12. Vorrichtung nach einem der Ansprüche 1 bis 11, wobei die Einrichtung EQᵢ (10, 20, 30) eine eingebaute Testvorrichtung BITEᵢ aufweist, wobei eine Vorrichtung BITEᵢ Betriebstestergebnisse der Einrichtung EQᵢ (10, 20, 30) erzeugt und Testergebnismitteilungen, die Informationen über einen Betriebszustand der Einrichtung EQᵢ (10, 20, 30) synthetisch herstellen, über ein Kommunikationsnetz des Systems an einen Hauptrechner RC (2) liefert, **dadurch gekennzeichnet, dass,** während das System (1) in Betrieb ist, die Vorrichtung BITEᵢ über den Kommunikationsknoten Nᵢ (12, 22, 32) die Gesamtheit der Betriebstestergebnisse der Einrichtung EQᵢ (10, 20, 30) an das Funk-Etikett ETᵢ (11, 21, 31) liefert, und dass der Hauptrechner RC (2) Testergebnismitteilungen überträgt, die Informationen über einen Betriebszustand der Einrichtungen EQᵢ (10, 20, 30) des Systems synthetisch herstellen.

13. Vorrichtung nach einem der Ansprüche 1 bis 5, **dadurch gekennzeichnet, dass** der Datenaustausch zwischen dem Funk-Etikett ETᵢ (11, 21, 31) und dem Knoten Nⱼ (12, 22, 32) mittels einer Drahtverbindung durchgeführt wird, und dass die Mittel zur elektromagnetischen Isolierung aus Wänden des Schutzgehäuses BPᵢ bestehen.

14. Verfahren zur Wartungsverwaltung einer Anzahl N von in ein System (1) integrierten Einrichtungen EQᵢ, wobei i einen Identifikationsindex der Einrichtung EQᵢ (10, 20, 30) bezeichnet und zwischen 1 und N liegt, wobei die Einrichtung EQᵢ (10, 20, 30) eine eingebaute Testvorrichtung BITEᵢ aufweist, wobei die Vorrichtung BITEᵢ über ein Kommunikationsnetz des Systems (1) Testergebnismitteilungen an einen Hauptrechner RC (2) des Systems (1) liefert, wobei jede Einrichtung EQᵢ (10, 20, 30) einen Kommunikationsknoten Nᵢ (12, 22, 32) und ein Etikett ETᵢ (11, 21, 31) aufweist und von einem Schutzgehäuse BPᵢ geschützt wird, wobei der Kommunikationsknoten Nⱼ (12, 22, 32) eine Position innerhalb des Gehäuses BPᵢ einnimmt und gestaltet ist, um Daten mit dem Funk-Etikett ETᵢ (11, 21, 31) auszutauschen, wobei das Funk-Etikett ETᵢ (11, 21, 31) fest mit dem Gehäuse BPᵢ verbunden und gestaltet ist, um Daten über eine kontaktlose Verbindung auszutauschen, wobei das Verfahren von einer Vorrichtung nach einem der vorhergehenden Ansprüche angewendet wird,
wobei das Verfahren **dadurch gekennzeichnet ist, dass** es die folgenden Schritte aufweist:
- Übertragung der Testergebnisse von der Vorrichtung BITEᵢ an das Etikett ETᵢ (11, 21, 31) über die Kommunikationsknoten Nⱼ (12, 22, 32);
- Speichern der Testergebnisse in einem Speicher des Etiketts ETᵢ (11, 21, 31).
